# DEMANDE DE BREVET EUROPEEN

(11) **EP 1 086 875 A1**
(43) Date de publication de la demande: **28.03.2001**
(21) Numéro de dépôt: 00402547.4
(22) Date de dépôt: 15.09.2000
(51) Int. Cl.: B62B 1/14

(54) **Diable à basculement assisté pour la manutention de charges**

(30) Priorité: 21.09.1999 FR 9911757
(71) Demandeur: FIMM (Société de Fabrication de Matériel et de Manutention), 89300 Joigny (FR)
(72) Inventeur: Bardin, Denis, 89330 Saint Loup (FR); Leguy, Thierry, 89110 Aillant sur Tholon (FR); Malare, Patrick, 89190 Pont sur Vanne (FR)
(74) Mandataire: Michardière, Bernard

(57) **Abrégé**

Diable comportant un châssis (2) muni, en partie haute, de moyens de préhension (4a) et, à sa partie inférieure, vers l'avant, d'une bavette (10), et vers l'arrière d'au moins une roue (lla) montée sur un axe transversal (12) porté par des moyens de support agencés pour permettre une translation de l'axe (12) vers le haut relativement au châssis (2) ; des moyens élastiques (E) prévus pour solliciter les moyens de support vers une position sortie, ces moyens élastiques étant propres à s'effacer lors de la prise de la charge (C) et à permettre la venue des moyens de support en une position rentrée, les moyens de support comprenant au moins un organe coulissant (13a) disposé dans au moins un élément tubulaire (16a) du châssis et sollicité vers l'extérieur par les moyens élastiques (E). Les moyens élastiques (E) sont disposés à l'extérieur de l'élément tubulaire (16a) du châssis.

## Description

L'invention est relative à un diable à basculement assisté pour la manutention de charges du type décrit dans le brevet FR 2 663 600 .

Un diable de ce type comporte un châssis muni, en partie haute, de moyens de préhension et, à sa partie inférieure, vers l'avant, d'une bavette destinée à être engagée sous une charge à soulever et à transporter, et vers l'arrière d'au moins une roue montée sur un axe transversal porté par des moyens de support agencés pour permettre une translation de l'axe vers le haut relativement au châssis ; des moyens élastiques sont prévus pour solliciter les moyens de support vers une position sortie, ces moyens élastiques étant propres à s'effacer lors de la prise de la charge et à permettre la venue des moyens de support en une position rentrée, les moyens de support comprenant au moins un organe coulissant disposé dans au moins un élément tubulaire du châssis et sollicité vers l'extérieur par les moyens élastiques. Lors du soulèvement de la charge, la partie arrière de la bavette peut venir en contact en un point avec le sol et le diable peut basculer autour de ce point situé en avant de la roue, ce qui améliore l'effet de levier et contribue à assister le basculement.

Selon US-2 765 090 , les moyens de support peuvent comprendre deux organes coulissants engagés respectivement dans deux éléments tubulaires parallèles correspondants du châssis et sollicités vers l'extérieur par les moyens élastiques disposés à l'extérieur des éléments tubulaires.

L'invention a pour but, surtout, de fournir un diable à basculement assisté du type défini précédemment qui, tout en conservant l'avantage de l'assistance au basculement, soit d'une construction simple et économique. Il est important, en effet, que l'avantage de l'assistance au basculement ne soit pas freiné par un prix de revient trop élevé.

Selon l'invention, un diable à basculement assisté du type défini précédemment est caractérisé par le fait que les organes coulissants sont fixés sur l'axe de(s) roue(s), orthogonalement à cet axe et que le plan moyen des éléments tubulaires est incliné vers l'arrière d'un angle aigu par rapport au plan moyen du cadre.

Le montage et la réalisation du diable s'en trouvent simplifiés de manière sensible de sorte que le prix de revient est nettement abaissé.

L'angle aigu formé entre le plan moyen des éléments tubulaires et le plan moyen du cadre est de préférence inférieur à 15°, avantageusement de l'ordre de 12°.

Avantageusement, les moyens élastiques comprennent, pour chaque élément tubulaire, un ressort de compression en hélice disposé en butée contre l'extrémité inférieure de l'élément tubulaire et engagé autour de chaque organe coulissant. Une autre butée pour le ressort, liée à l'axe de la roue, est formée par une zone de cet axe transversal contre laquelle vient directement en appui l'extrémité inférieure du ressort de compression.

Généralement, le diable comporte deux roues prévues aux extrémités transversales d'un même axe et la partie centrale de l'axe transversal a un plus fort diamètre que les extrémités engagées dans les moyeux des roues .

Le châssis peut comprendre, en arrière du cadre par rapport à la bavette, un tube cintré en U renversé, dont les deux branches tournées vers le bas sont ouvertes à leurs extrémités inférieures et constituent les deux éléments tubulaires propres à recevoir les deux organes coulissants solidaires de l'axe des roues. La partie haute du U renversé forme une traverse reliant les deux branches parallèles et est fixée, notamment par soudure, contre le plan du cadre du châssis ; l'extrémité inférieure des branches est écartée vers l'arrière du châssis et est fixée, notamment par soudure, à une traverse solidaire du cadre, mais écartée de celui-ci vers l'arrière.

La limitation de la course de rentrée de l'organe coulissant peut être assurée par la venue en butée des spires du ressort de compression en hélice. La limitation de la sortie de l'organe coulissant peut être assurée par une boutonnière solidaire de cet organe coulissant et par un moyen de butée, tel qu'une vis, traversant la boutonnière et fixé à l'élément tubulaire.

L'organe coulissant est avantageusement constitué par un tube et la boutonnière est réalisée à l'aide d'un élément, notamment un fer plat, recourbé en U renversé et fixé à l'extrémité supérieure de l'organe tubulaire.

L'invention consiste, mises à part les dispositions exposées ci-dessus, en un certain nombre d'autres dispositions dont il sera plus explicitement question ci-après à propos d'un exemple de réalisation décrit en détail avec référence aux dessins ci-annexés, mais qui n'est nullement limitatif.

La figure 1, de ces dessins, est une vue de côté d'un diable conforme à l'invention avant prise d'une charge par basculement.

La figure 2 est une vue de côté du diable après basculement avec prise d'une charge.

La figure 3 est une perspective éclatée, vue de l'arrière, d'un diable selon l'invention.

Les figures 4 et 5, enfin, sont des vues de détails de construction.

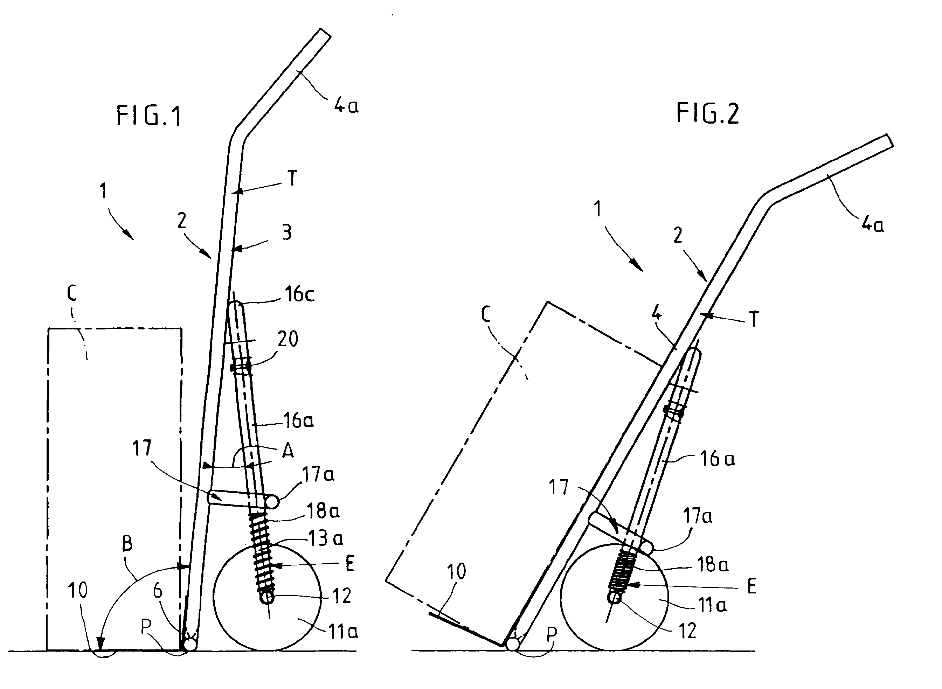

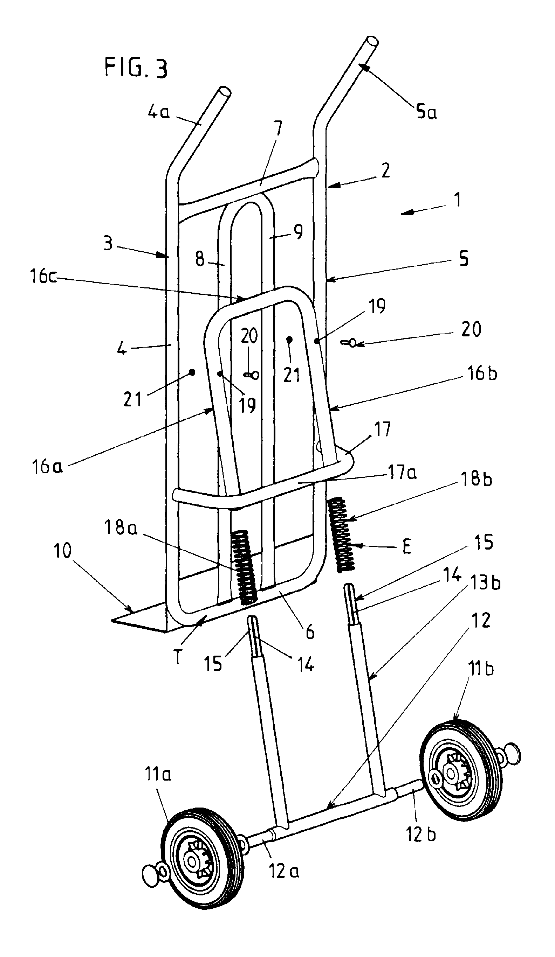

En se reportant aux dessins, notamment aux figures 1 à 3, on peut voir un diable 1, pour la manutention de charges telles que C, comportant un châssis 2.

Le châssis 2 comprend un cadre 3 rigide situé essentiellement dans un plan. Le cadre 3 comprend deux montants 4, 5 latéraux parallèles . Pour réaliser le cadre 3, de préférence un même tube T est recourbé suivant un contour sensiblement rectangulaire ouvert vers le haut, la partie transversale 6 inférieure de ce tube assurant la liaison entre les montants 4 et 5 , appartenant à ce tube. Les extrémités supérieures des montants 4 et 5 sont recourbées vers l'arrière, hors du plan du cadre 3 pour former des poignées 4a, 5a constituant des moyens de préhension du diable. Les montants 4 et 5 sont reliés en partie haute par une traverse supérieure 7 soudée à chacune de ses extrémités à un montant respectif 4, 5. De préférence, les extrémités de la traverse 7 tubulaire sont aplaties pour faciliter la liaison par soudure.

A l'intérieur du contour sensiblement rectangulaire formé par les montants 4, 5 et les parties transversales 6, 7, sont prévus deux montants intérieurs 8, 9, parallèles aux montants 4 et 5. Ces montants 8 et 9 sont constitués, par exemple, par les branches d'un U renversé formé par un tube recourbé dont la partie supérieure, qui relie les branches 8 et 9, est soudée à la traverse 7 à mi-longueur. Les extrémités inférieures des branches 8 et 9, de préférence aplaties, sont soudées à la barre transversale inférieure 6.

Une bavette 10 est fixée à l'extrémité inférieure du cadre 3. Cette bavette 10 est destinée à être engagée sous une charge C à soulever et à transporter, comme illustré sur Fig.1. Le plan de la bavette 10 forme un angle B d'environ 95° avec le plan moyen du cadre 3.

Le diable comporte vers l'arrière, c'est-à-dire du côté du cadre 3 opposé à la bavette 10, deux roues 11a, 11b montées rotatives à chacune des extrémités d'un axe transversal 12. La partie centrale de l'axe a un plus fort diamètre, tandis que les extrémités 12a, 12b sont décolletées et engagées dans les moyeux des roues.

Deux tubes 13a, 13b parallèles sont fixés, notamment par soudure, sur l'axe 12, orthogonalement à cet axe. Ces tubes 13a, 13b constituent des organes coulissants comme précisé ci-après.

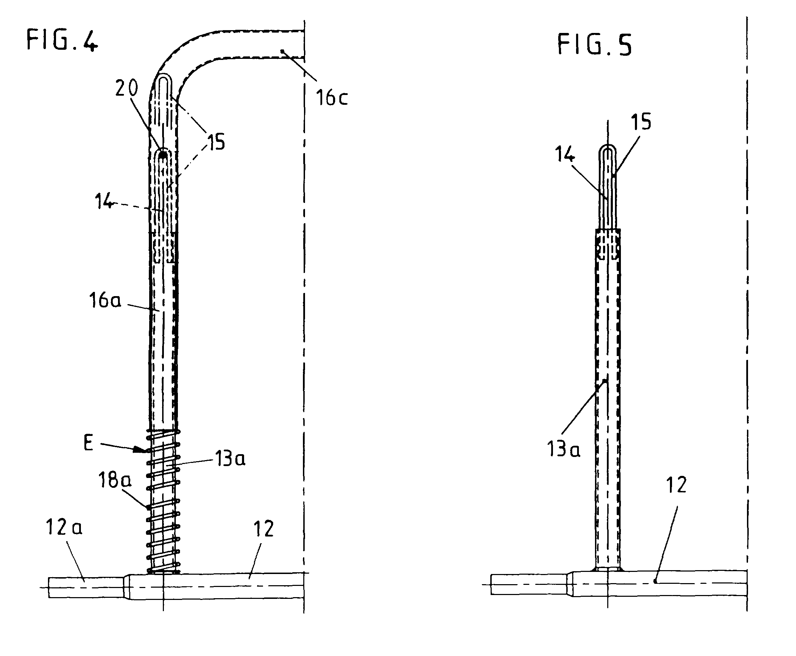

Chaque tube 13a, 13b est muni à son extrémité supérieure d'une boutonnière 14 réalisée par exemple à l'aide d'un fer plat 15 (Figs.4 et 5) recourbé en U avec sa concavité tournée vers le bas, et dont les branches sont engagées et fixées par soudure dans les tubes respectifs 13a, 13b. Le plan moyen de la fente de la boutonnière 14 est orthogonal à l'axe 12.

Un élément tubulaire 16a, 16b, ouvert à son extrémité inférieure, est prévu à l'arrière du cadre 3 pour recevoir respectivement les tubes 13a, 13b qui peuvent coulisser avec un jeu réduit, à l'intérieur de l' élément tubulaire respectif. A titre d'exemple non limitatif, les éléments 16a, 16b ont un diamètre extérieur de 28 mm et une épaisseur de 1,5 mm d'où un diamètre intérieur de 25 mm, alors que le diamètre extérieur des tubes 13a, 13b est égal à 24 mm. Les organes coulissants formés par les tubes 13a, 13b, sont coaxiaux aux éléments tubulaires 16a, 16b, et l'axe 12 des roues a son axe géométrique situé dans le plan des axes géométriques des éléments 16a, 16b.

Les éléments tubulaires 16a, 16b appartiennent avantageusement à un même tube recourbé en U renversé dont la concavité est tournée vers le bas et dont la partie transversale supérieure 16c est fixée, de préférence par soudure, aux montants intérieurs 8, 9 du cadre 3. Le plan moyen du U renversé formé par les branches 16a, 16b et la partie transversale 16c est incliné vers l'arrière par rapport au plan moyen du cadre 3 d'un angle aigu A (Fig.1) de préférence inférieur à 15°, avantageusement de l'ordre de 12°.

Les parties inférieures des éléments tubulaires 16a, 16b sont fixées par soudure à une traverse 17a solidaire du cadre 3 mais écartée vers l'arrière . La traverse 17a est avantageusement formée par une partie d'un tube 17 recourbé en U dont le plan moyen est sensiblement perpendiculaire à celui du cadre 3 et dont la concavité est tournée vers l'avant. Les branches parallèles de ce tube 17 recourbé sont soudées à l'arrière des montants 4,5.

Des moyens élastiques E, comprenant avantageusement au moins un ressort de compression 18a, 18b en hélice, sont prévus à l'extérieur de l'élément tubulaire respectif 16a, 16b. Dans l'exemple considéré, deux ressorts de compression en hélice 18a, 18b, sont prévus et engagés respectivement autour des organes coulissants 13a, 13b, lesquels sont engagés respectivement dans les éléments tubulaires 16a, 16b. L'écartement des axes des éléments 16a, 16b est le même que celui des axes des organes 13a, 13b.

Les ressorts 18a, 18b viennent en butée du côté inférieur contre une zone de l'axe 12, et du côté supérieur, contre l'extrémité inférieure des éléments tubulaires 16a, 16b. Le diamètre moyen des ressorts 18a, 18b est sensiblement le même que le diamètre moyen des éléments 16a, 16b. Le cas échéant, des collerettes peuvent être prévues aux extrémités inférieures des éléments 16a, 16b pour des diamètres différents.

Un trou 19 traverse diamétralement la partie supérieure de chaque élément 16a, 16b pour le passage d'une vis 20 arrêtée du côté opposé par un écrou 21.

La vis 20 est mise en place après que les organes coulissants 13a, 13b ont été engagés dans les éléments tubulaires 16a, 16b. La vis 20 traverse la boutonnière correspondante 14 et permet de limiter la sortie de l'organe correspondant 13a, 13b en venant en butée contre l'extrémité supérieure de la boutonnière 14.

Dans le sens opposé, c'est-à-dire dans le sens correspondant à l'entrée des organes 13a, 13b dans les éléments 16a, 16b, la limitation de course est assurée par la venue en butée des spires des ressorts de compression 18a, 18b comme illustré sur Fig.2.

Ceci étant, l'utilisation et le fonctionnement du diable sont les suivants.

Pour transporter la charge C avec le diable 1, on engage la bavette 10 sous la charge C comme illustré sur Fig.1. On exerce sur les poignées 4a, 5a un couple de basculement vers l'arrière.

Selon la représentation de Fig.2, le cadre 3 bascule dans le sens des aiguilles d'une montre. Les ressorts 18a, 18b sont comprimés et la traverse 6 vient en appui contre le sol en un point P situé à l'arrière de la bavette 10, en avant des roues 11a, 11b. Le basculement s'effectue autour de ce point P de contact avec le sol. Le bras de levier de la force exercée par l'utilisateur est maximal, alors que le bras de levier de la charge C est minimal. Le basculement se trouve donc assisté.

Pour le transport de la charge, déjà inclinée, l'utilisateur décolle la bavette 10 du sol en faisant pivoter l'ensemble du châssis autour de l'axe 12 des roues. Lors du déplacement de la charge, les ressorts 18a, 18b restent comprimés, les organes 13a, 13b étant en position rentrée dans les éléments tubulaires 16a, 16b.

Dès que la charge C est déposée, les ressorts 18a, 18b se détendent jusqu'à ce que les vis 20 arrêtent les organes 13a, 13b par venue en butée contre l'extrémité supérieure des boutonnières 14.

Les opérations de fabrication et de montage du diable selon l'invention sont particulièrement simples.

Le montage des ressorts 18a, 18b s'effectue très rapidement. Les butées à chaque extrémité de ces ressorts ne demandent aucun montage particulier. La mise en place des vis 20 assurant la limitation de la course de sortie des organes 13a, 13b est très rapide et simple. Les principaux éléments du châssis sont obtenus à partir de tubes recourbés et assemblés par soudage, ce qui simplifie grandement la fabrication. On obtient ainsi un diable présentant tous les avantages du basculement assisté et dont le prix de revient est acceptable. En particulier, le cadre 3 peut correspondre à celui d'un chariot diable ordinaire sur lequel vient simplement s'ajouter l'élément 17 et les éléments tubulaires 16a, 16b.

Les moyens élastiques E pourraient être constitués par d'autres moyens que des ressorts de compression en hélice, par exemple des ressorts de compression d'un autre type, ou des ressorts de traction.

## Revendications

1. Diable à basculement assisté pour la manutention de charges, comportant un châssis (2) avec un cadre rigide (3) situé essentiellement dans un plan, muni en partie haute de moyens de préhension (4a, 5a) et, à sa partie inférieure, vers l'avant, d'une bavette (10) destinée à être engagée sous une charge (C) à soulever et à transporter, et vers l'arrière d'au moins une roue (lla,llb) montée sur un axe transversal (12) porté par des moyens de support agencés pour permettre une translation de l'axe (12) vers le haut relativement au châssis (2) ; des moyens élastiques (E) prévus pour solliciter les moyens de support vers une position sortie, et pour s'effacer lors de la prise de la charge et permettre la venue des moyens de support en une position rentrée, les moyens de support comprenant deux organes coulissants (13a, 13b) engagés respectivement dans deux éléments tubulaires parallèles correspondants (16a, 16b) du châssis et sollicités vers l'extérieur par les moyens élastiques (E) disposés à l'extérieur des éléments tubulaires (16a, 16b),
caractérisé par le fait que les organes coulissants (13a, 13b) sont fixés sur l'axe (12) de(s) roue(s), orthogonalement à cet axe et que le plan moyen des éléments tubulaires (16a, 16b) est incliné vers l'arrière d'un angle aigu (A) par rapport au plan moyen du cadre (3).

2. Diable selon la revendication 1, caractérisé par le fait que l'angle aigu (A) formé entre le plan moyen des éléments tubulaires (16a, 16b) et le plan moyen du cadre (3) est inférieur à 15°, avantageusement de l'ordre de 12°.

3. Diable selon la revendication 1 ou 2, caractérisé par le fait que les moyens élastiques comprennent, pour chaque élément tubulaire, un ressort de compression (18a, 18b) en hélice disposé en butée contre l'extrémité inférieure de l'élément tubulaire (16a, 16b) et engagé autour de chaque organe coulissant (13a, 13b).

4. Diable selon la revendication 3, caractérisé par le fait que l'extrémité inférieure de chaque ressort de compression (18a, 18b) vient directement en appui contre une zone de l'axe transversal (12) des roues (11a, 11b).

5. Diable selon l'une des revendications précédentes, comportant deux roues prévues aux extrémités transversales d'un même axe (12), caractérisé par le fait que la partie centrale de l'axe transversal (12) a un plus fort diamètre que les extrémités (12a,12b) engagées dans les moyeux des roues .

6. Diable selon l'une des revendications précédentes, caractérisé par le fait que le châssis (2) comprend en arrière du cadre (3) par rapport à la bavette, un tube (16a,16c,16b) cintré en U renversé, dont les deux branches (16a, 16b) tournées vers le bas sont ouvertes à leurs extrémités inférieures et constituent les deux éléments tubulaires propres à recevoir les deux organes coulissants (13a, 13b) solidaires de l'axe de(s) roue(s).

7. Diable selon la revendication 6, caractérisé par le fait que la partie haute du U renversé forme une traverse (16c) reliant les deux branches parallèles (16a, 16b) et est fixée contre le plan du cadre (3) du châssis.

8. Diable selon la revendication 7, caractérisé par le fait que l'extrémité inférieure des branches (16a, 16b) est écartée vers l'arrière du châssis et est fixée à une traverse (17a) solidaire du cadre, mais écartée de celui-ci vers l'arrière.

9. Diable selon l'une des revendications précédentes, caractérisé par le fait que la limitation de la sortie de l'organe coulissant (13a, 13b) est assurée par une boutonnière (14) solidaire de cet organe coulissant et par un moyen de butée, tel qu'une vis (20), traversant la boutonnière et fixé à l'élément tubulaire (16a,16b).

10. Diable selon la revendication 9 , caractérisé par le fait que l'organe coulissant (13a,13b) est constitué par un tube et la boutonnière (14) est réalisée à l'aide d'un fer plat (15), recourbé en U renversé et fixé à l'extrémité supérieure de l'organe coulissant (13a,13b).
